# EUROPEAN PATENT SPECIFICATION

(11) **EP 1 738 523 B1**
(45) Date of publication and mention of the grant of the patent: **03.04.2013**
(21) Application number: 05733401.3
(22) Date of filing: 19.04.2005
(51) Int. Cl.: H04W 24/00

(54) **METHOD AND APPARATUS FOR MONITORING MULTISESSION IN WIRELESS COMMUNICATION SYSTEM**
VERFAHREN UND VORRICHTUNG ZUM ÜBERWACHEN EINER MEHRFACHSITZUNG IN EINEM DRAHTLOSEN KOMMUNIKATIONSSYSTEM
PROCEDE ET APPAREIL POUR LE CONTROLE DE SESSION MULTIPLE DANS UN SYSTEME DE COMMUNICATION SANS FIL

(30) Priority: 19.04.2004 KR 2004026881
(43) Date of publication of application: 03.01.2007
(73) Proprietor: Samsung Electronics Co., Ltd., Suwon-si, Gyeonggi-do, 443-742 (KR)
(72) Inventor: PARK, Sung-Jin; C/O Samsung Electronics Co., Ltd, Suwon-si, Gyeonggi-do (KR); LIM, Han-Na C/O Samsung Electronics Co., Ltd, Suwon-si, Gyeonggi-do (KR); SUNG, Sang-Kyung; C/O Samsung Electronics Co., Ltd, Suwon-si, Gyeonggi-do (KR); JUNG, Ki-Ho C/O Samsung Electronics Co., Ltd, Suwon-si, Gyeonggi-do (KR); HAN, Jea-Hun C/O Samsung Electronics Co., Ltd, Suwon-si, Gyeonggi-do (KR)
(74) Representative: Grünecker, Kinkeldey, Stockmair & Schwanhäusser
(86) International application number: PCT/KR2005/001119
(87) International publication number: WO 2005/101742

(56) References cited:
- WO-A1-00/69189
- WO-A1-01/39443
- WO-A1-02/84895
- WO-A1-03/071774
- WO-A1-2004/006449
- US-A1- 2002 019 228
- OMA POC WG CONTACT(S): ANDREW ALLEN ET AL: "Reply LS to 3GPP on principles for overlapping issues with Public OMA Confidential OMA regarding PoC", 3GPP DRAFT; SP-040016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Phoenix, USA; 20040303, 3 March 2004 (2004-03-03), XP050201404, [retrieved on 2004-03-03]
- "OMA-AD PoC-V1 0-20040204-D Push to talk over Cellular (PoC) - Architecture. Draft Version 1.0", ANNOUNCEMENT OPEN MOBILE ALLIANCE, XX, XX, no. version 1.0, 4 February 2004 (2004-02-04), pages 1-77, XP002327398,

## Description

### BACKGROUND OF THE INVENTION

### 1. Field of the Invention

The present invention relates to a method and an apparatus for group communication in a wireless communication system, and more particularly to a method and an apparatus for monitoring an inactive session through media conversion in a multisession which includes one-to-one calls and group calls for group communication.

### 2. Description of the Related Art

In general, a mobile communication system refers generally to a communication system which enables users to communicate wirelessly when they are within the service area of the mobile communication system. A typical mobile communication system is a public land mobile network (PLMN). Usually, the mobile communication network is an access network providing a user with a wireless access to external networks, hosts, or services offered by specific service providers.

A professional mobile radio or private mobile radio (PMR) is a dedicated wireless communication system which was developed primarily for professional uses including and governmental and corporate users, such as the police, military, etc. PMR services have been provided through dedicated PMR networks constructed by a dedicated PMR technology. A PMR service market is divided among an analog technology, a digital technology, a conventional technology and a trunked technology, none of which has a dominating role. A terrestrial trunked radio (TETRA) is a standard defined by European Telecommunications standards Institute (ETSI) for digital PMR system. U.S. Pat. No. 6,141,347 discloses a wireless communication system which uses multicast addressing and decentralized processing in group calls.

Andrew et al teach in the "Reply Liaison Statement to 3GPP on principles for overlapping issues with OMA regarding PoC", TSGS # 23(04)0016, Meeting #23, Phoenix, USA, 15-18 March 2004, detailed requirements for Push-To-Talk over Cellular (PoC). They envision a multiple group operation mode, wherein a PoC subscriber is able to monitor multiple PoC group sessions, starts to hear traffic from any group where communication starts first, gets an identification of the group session(s) in which traffic is being received and continues monitoring other group sessions while talking or listening to a selected group session. The traffic is filtered such that the PoC subscriber only hears a single conversation at a time.

WO 2004/006449 A1 discloses a wireless communication system including a mobile station that is a member of multiple talkgroups and a method and an apparatus for interrupting a participant in a group call when a new group call is initiated, wherein the participant is able to select the group calls for which he or she shall be interrupted and the group calls for which he or she shall not be interrupted by means of prioritization of the multiple talkgroups.

One special feature provided by the PMR system lies in group communication. The term "group", as used herein, refers to a logical group of three or more users intended to participate in the same group communication, for example, a call.

The groups are created logically. That is, specific group communication information kept by the network side associates a specific user with a particular group-communication group. This association can be easily created, modified or changed. The same user may be a member in one or more group

communication. Typically, the members of the group communication belong to the same organization, such as the police, the fire brigade and a private company. Also, typically, the same organization has multiple separate groups, i.e., a set of groups.

A group call typically has a long time interval (up to several days) during which communication takes place quite infrequently and each interaction is typically brief. The total active traffic may be, for example, only 15 minutes during a call. Each talk burst or voice item has 7 seconds on the average in the conventional PMR systems. Therefore, radio channels or other expensive system resources cannot be allocated constantly due to the expense of the service. Group communication with a push-to-talk (PTT) is one of the essential features of a PMR network overcoming this problem. Generally, in group voice communication with a "push-to-talk, release-to-listen" feature, a group call is based on the use of a pressel (PTT switch) in a telephone as a switch. That is, the user indicates his/her desire to speak by pressing the PTT, and user equipment sends a service request to the network.

The network either rejects the request or allocates the requested resources on the basis of predetermined criteria, such as the availability of resources, the priority of the requesting user, etc. At the same time, a connection is established to all other active users in the specific subscriber group. After the voice connection has been established, the requesting user can talk and the other users can listen on the channel. When the user releases the PTT, the user equipment transmits a release message to the network, and the resources are released. Therefore, the resources are reserved only for the actual voice transaction or voice item.

Typically, there are various requirements for group communication in communication systems. The requirements include, for example, a call set up time must be short (i.e., a set up time of several seconds should not be allowed). Also, when a voice item is initiated, the user should be able to start speaking within hundreds of milliseconds at the initial stage of the set up. The listening party should hear a voice transmission within approximately one second if possible. Such a voice delay can be longer because a half-duplex mechanism is used.

Since group communication means that when one person speaks the others can only listen, a radio interface which is conventionally used for group communication is a half-duplex type radio interface. That is, only one direction is activated at a time. The communication system must be able to control the communication system so that only one member at a time can speak in a group communication.

A user can belong to multiple groups at the same time. Therefore, if there are multiple groups with which the user communicates at the same time, the communication system must be able to select and prioritize the group to which the user listens.

Push-to-talk-type group calls are desirable not only to conventional PMR users but also to many other types of users. For example, private persons may want to have talk groups, such as hobby groups, sport groups, etc. Small business users may use the push-to-talk-type group communication feature for a more frequent job-related communication during working within the same work group (inside a company or within some business communities).

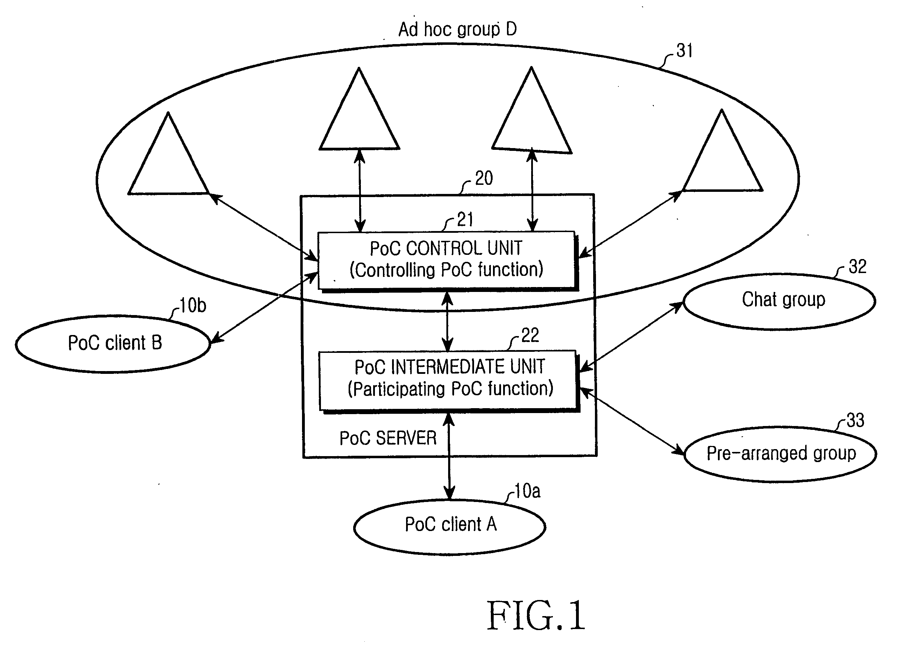

FIG. 1 is a block diagram illustrating a construction of the conventional apparatus for performing group communication in a wireless communication system.

To be specific, FIG 1 illustrates a push-to-talk-over-cellular (PoC) user (PoC client A) 10A which performs a multisession including a PoC group call and a PoC one-to-one call.

For the group call and the one-to-one call, a PoC server 20 includes a PoC control unit (controlling PoC function) 21 and a PoC intermediate unit (participating PoC function) 22.

The PoC control unit 21 manages an entire PoC session; accepts the floors requested by PoC users, determines a sequence of the requests, and authorizes the requests; and distributes a user talk burst to all other users participating in the group call. Also, the PoC control unit 21 functions to provide information about users participating in the group call.

The PoC intermediate unit 22 manages sessions connected to each user, and performs an intermediate role when either a user requests the floor or the PoC control unit 21 authorizes the user. Also, the PoC intermediate unit 22 relays media traffic between the PoC control unit 21 and the user.

A PoC call supports not only one-to-one calls but also group calls. The group calls include an Ad-hoc group call, a pre-arranged group call and a chat group call. Herein, according to the Ad-hoc group call scheme, a group call is performed after a user selects a plurality of communication partners at his/her desire in his/her own contact list. According to the pre-arranged group call scheme, when a user registers members of a group with a group name and then makes a call by the group name, the call is sent only to the registered members. According to the chat group call scheme, all users interested in a chat room can participate when a user opens the chat room.

In the PoC scheme, as illustrated in FIG. 1, one user can participate not only in one session but also in multiple one-to-one calls and group calls at the same time, that is, one user can participate in a multisession.

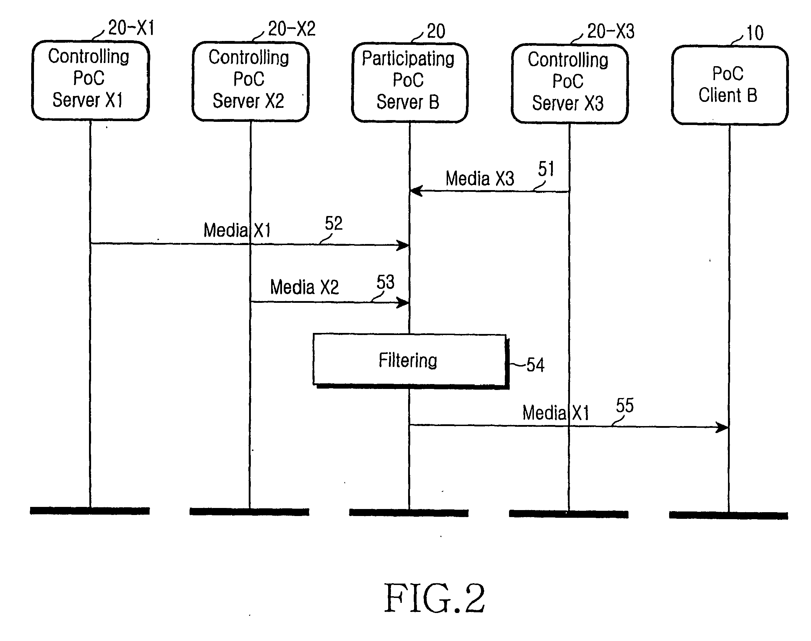

FIG. 2 is a flow diagram illustrating the conventional operation for performing a group communication in a wireless communication system.

When a PoC user participates in a multisession including PoC group calls and PoC one-to-one calls, the voice message of only one session is transferred and the voice messages of the other session are filtered. In the multisession including PoC group calls and PoC one-to-one calls, when a user requests an active session, the PoC server 20 selects and transfers the voice message of the requested active session, and filters and discards the voice messages of the other inactive sessions, in order to the efficiently use channels and to assure voice quality in the active session.

Referring again to FIG. 2, in steps 51 to 53, an intermediate PoC server B (participating PoC server B) 20 receives voice messages X1, X2 and X3 from controlling PoC servers 20-X1, 20-X2 and 20-X3, respectively. In step 54, the intermediate PoC server B 20 filters the voice messages of the other inactive sessions except for the requested active session. In step 55, the intermediate PoC server B 20 transmits the voice message (Media X1) corresponding to the active session to a PoC user B 10.

However, according to the prior method of using a filtering scheme, it is impossible for a user to understand conversation contents going and coming through other sessions, and what is worse, it is impossible to even understand whether or not each inactive session includes a voice message. Therefore, when the PoC user moves from an active session to an inactive session, the PoC user does not have any information about the inactive session. As a result, after moving to an inactive session, the PoC user must wait until he/she can listen to a voice message, or in the case of no voice message in the inactive session, the PoC user must move to another inactive session to wait until he/she can listen to a voice message.

Whenever a terminal moves from an active session to an inactive session, the terminal must send a session change request to the PoC intermediate unit 22 and the PoC intermediate unit 22 must then change the active session. Therefore, it is necessary to navigate one session to another, thereby causing a time delay.

### SUMMARY OF THE INVENTION

Accordingly, the present invention has been made to solve the above-mentioned problems occurring in the prior art, and an object of the present invention is to provide a method and an apparatus which discards a voice message of an inactive session through filtering and monitors the voice message through media conversion according to a user's setting when there is a voice message stream in the inactive session in a wireless communication system performing group communication.

To accomplish this object, in accordance with one aspect of the present invention, there is provided a method for monitoring a multisession including one-to-one calls and group calls at a same time in a multisession network of a wireless communication system performing group communication according to claim 1. In accordance with another aspect of the present invention, the method includes the steps of receiving a request message for a monitoring set up from a user, receiving a voice message from each related session, confirming session selection of the received voice message through information included in the request message, and confirming a set monitoring method for each session, and converting the received voice message into a text packet stream and transmitting the converted text packet stream, when the received voice message is in an inactive session and the session monitoring method is set to use text.

In accordance with another aspect of the present invention, there is provided a method for monitoring a multisession including one-to-one calls and group calls at a same time in a wireless communication system performing group communication according to claim 16. In accordance with a further aspect of the present invention, the method includes the steps of receiving a request message for a monitoring set up from a user, receiving a voice message from each related session, confirming session selection of the received voice message through information included in the request message, and confirming a set monitoring method for each session; and deleting the voice message by filtering when the voice message is in an inactive session and the session monitoring method is set to use one of a beep and light, and reporting that there is the voice message in the inactive session corresponding to the voice message.

In accordance with still another aspect of the present invention, there is provided an apparatus for monitoring a multisession including one-to-one calls and group calls at a same time in a wireless communication system performing group communication according to claim 8. According to another aspect of the present invention, the apparatus includes an intermediate unit for receiving a request message for a monitoring set up from a user terminal, managing sessions correlating with each user, and intermediating a voice message received from each of the correlating sessions a control unit for confirming a session and a set session monitoring method of the voice message received from each of the correlating sessions, and transmitting the received voice message according to a result of the confirming, and a text conversion unit for converting the voice message into a text form when the voice message is in an inactive session and the session monitoring method is set to use text.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a construction of the conventional apparatus for performing group communication in a wireless communication system;
FIG. 2 is a flow diagram illustrating the conventional operation for performing a group communication in a wireless communication system;
FIG. 3 is a block diagram illustrating a construction of a PoC network in a wireless communication system according to a preferred embodiment of the present invention;
FIG. 4 is a block diagram illustrating a detailed construction of a PoC server shown in FIG. 1;
FIG. 5 is a block diagram illustrating a detailed construction of a voice-transfer-text function (VTTF) shown in FIG. 4;
FIG 6 is a flowchart illustrating an operation of the PoC server according to the present invention; and
FIGs. 7 to 9 are flow diagrams illustrating multisession monitoring operation procedures according to the present invention.

### DETAILED DESCRIPTION OF THE PREFERRED EMBODIMENT

Hereinafter, preferred embodiments of the present invention will be described with reference to the accompanying drawings. In the following description of the embodiments of the present invention, a detailed description of known functions and configurations incorporated herein will be omitted when it may obscure the subject matter of the present invention.

The present invention described below can be applied to a digital communication system which can be used as an access network enabling packet mode communication between final users and an overlaying packet mode group communication service. Particularly, the present invention is used in a mobile communication system including an Session Initiated Protocol/Internet Protocol (SIP/IP) core, such as 3^{rd} Generation Partnership Project (3GPP) IP Multimedia Subsystem (IMS) or 3^{rd} Generation Partnership Project 2 (3GPP2) Multimedia Domain (MMD) which supports a packet radio scheme. The preferred embodiments of the present invention will be described without a limitation to a particular network. In addition, an IP voice communication method described in the present invention will not be limited to a specific method such as a voice over IP (VoIP).

Hereinafter, a method for monitoring inactive sessions in a PoC multisession including PoC group calls and PoC one-to-one calls in a wireless communication system and an apparatus for the same will be described according to the preferred embodiments of the present invention.

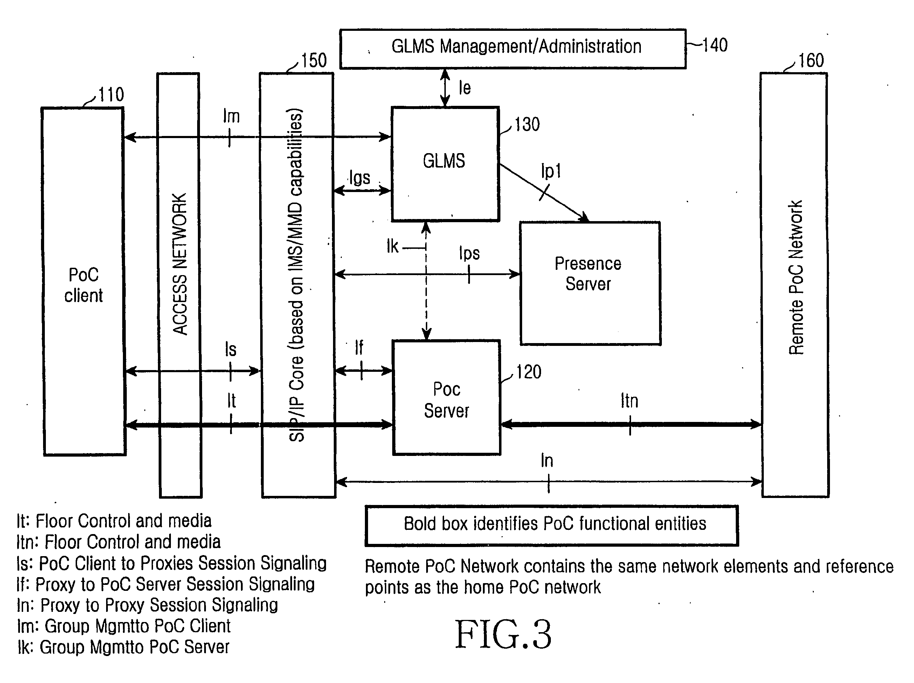

FIG. 3 is a block diagram illustrating a construction of a PoC network for monitoring inactive sessions in a PoC multisession in a PoC system according to a preferred embodiment of the present invention.

The PoC network includes a PoC server 120 for providing a PoC service to a PoC user 110, a Group List Management Server (GLMS) 130 for managing the creation, modification and cancelling of groups and group members, and a GLMS exterior-connection entity 140 for allowing a reliable exterior network to access the group information of the GLMS 130 so as to manage the creation, modification and deletion of the group information.

The PoC network includes an SIP/IP core 150 for creating, managing and ending a session, and a remote PoC network 160 to which the other users (not shown) except for the user in question belong.

The PoC user 110 can input information about groups and group members through the PoC user's 110 own terminal in the GLMS 130. Also, the PoC user 110 can understand information about PoC users which the PoC user 110 can call, by an individual or a group list received from the GLMS 130.

Another method of creating, modifying and managing groups and group members in the GLMS 130 is to input a control signal through a communication network, which the PoC service provider can reliable, such as an Internet, an Intranet, etc. In order to use a PoC call service, the PoC user 110 registers the POC user's 110 own PoC address in the SIP/IP core 150. Then, the SIP/IP core 150 stores information about the PoC user 110 on the basis of the request of the PoC user 110. When the PoC user 110 wishes to perform a PoC call, the PoC user 110 requests a call to the PoC server120 through the SIP/IP core 150 on the basis of information received from the GLMS 130 as described above. Then, the PoC server 120 searches for the address of a called person using the requested information and sends a request to a remote PoC server having information about the called person. Similarly to the ordinary PoC server, the remote PoC server searches its own information for a PoC user to be called, and sends a PoC call to a found PoC user which was located using the stored information. Although a PoC user 110 can be engaged in a PoC call, the PoC user 110 can send or receive another call, which is managed by the PoC server 120.

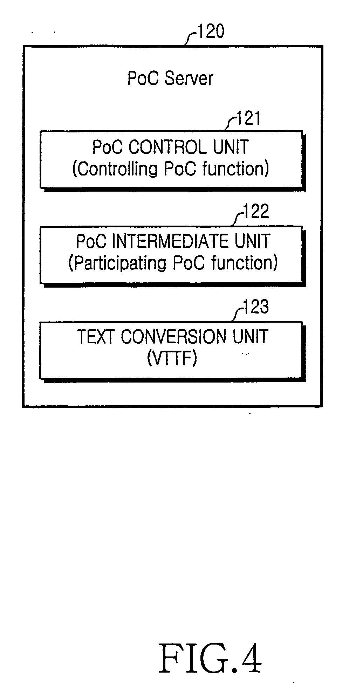

FIG. 4 is a block diagram illustrating a detailed construction of the PoC server shown in FIG. 1,

The PoC server 120 includes a PoC control unit (controlling PoC function) 121, a PoC intermediate unit (participating PoC function) 122, and a voice-transfer-text function (VTTF) 123 for converting a voice packet stream into a text packet stream.

The PoC control unit 121 manages an entire PoC session; accepts floors **(where "floors" represent "POC user's talking rights")** requested by PoC users, determines a sequence of requests by POC users, and authorizes the requests; and distributes a user talk burst to all other users participating in a group call. Also, the PoC control unit 121 provides information about users participating in the group call.

The PoC intermediate unit 122 manages sessions connected to each user, and performs an intermediate role when either a user requests the floor or the PoC control unit 121 authorizes the user. Also, the PoC intermediate unit 122 relays media between the PoC control unit 121 and the user.

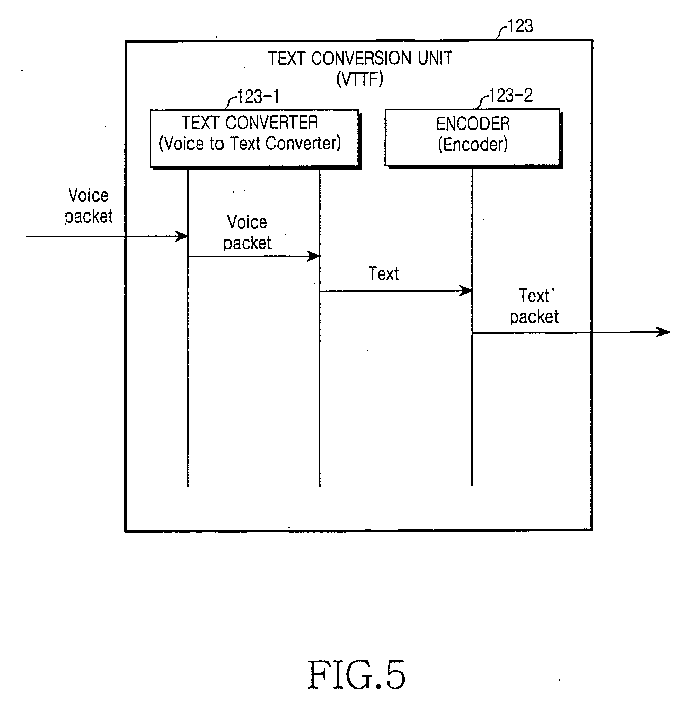

FIG 5 is a block diagram illustrating a detailed construction of a VTTF shown in FIG. 4. The VTTF 123 includes a converter (voice-to-text converter) 123-1 for converting a voice packet stream into text, and an encoder 123-2 for converting the text into a binary text stream. While this embodiment is described with reference to the VTTF 123 existing in the PoC server 120, it will be understood by those skilled in the art that the VTTF may exist independently of the PoC server 120 as a network component.

Hereinafter, a method for monitoring a multisession in the PoC network having the above-mentioned construction will be described with the accompanying drawings according to the preferred embodiments of the present invention. First, in a method for converting a voice packet stream in an inactive session (which is one of multisession monitoring methods proposed in the present invention) into text, a VTTF function of converting the voice packet stream into text will be described as an example.

Referring again to FIG. 5, when the VTTF 123 receives a voice packet stream, the converter 123-1 first converts the received voice packet stream into a voice waveform. Next, the converter 123-1 classifies the voice waveform into vowels and consonants through waveform analysis, and converts the vowels and consonants into text.

Then, the encoder 123-2 converts the converted text into a binary text form and outputs a text packet stream.

Hereinafter, a multisession operation in the PoC server 120 will be described with the accompanying drawings.

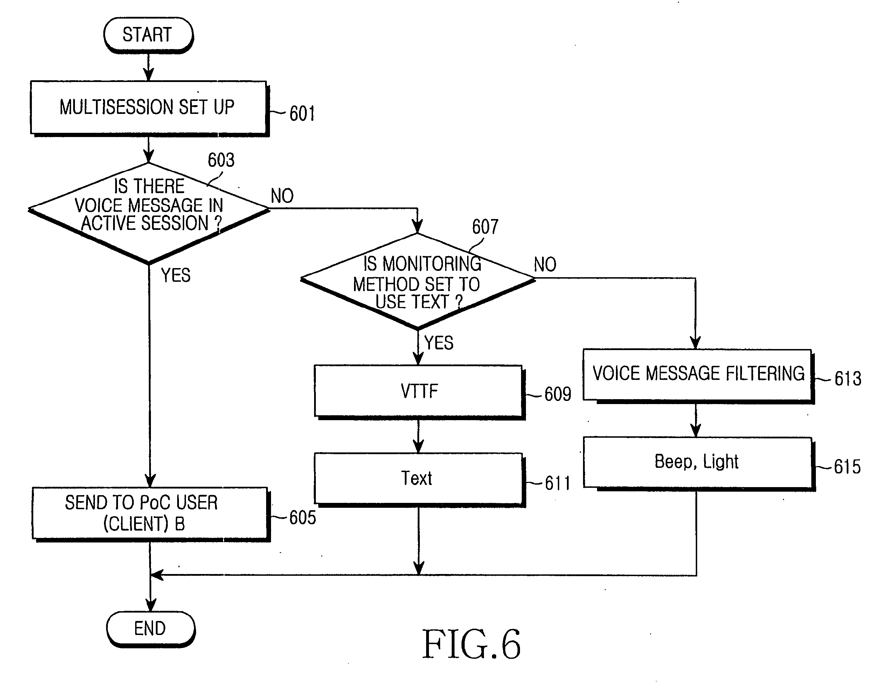

FIG. 6 is a flowchart illustrating an operation of the PoC server according to the present invention.

In step 601, the PoC server 120 performs the set up of a multisession. Next, when a voice message arrives at the PoC intermediate unit 122 in the multisession, the PoC server 120 first determines whether the voice message is in an active session by a call-ID, which is an SIP parameter, in step 603. As a result of the determination, when the voice message is in an active session, the PoC server 120 transmits the received voice message intactly to a PoC user in step 605.

In contrast, as a result of the determination, when the received voice message is in an inactive session, the PoC server 120 determines whether the session monitoring method is set to use text in step 607. As a result of step 607, when the session monitoring method is set to use text, the PoC server 120 converts the voice message into text through the VTTF 123 in step 609, and then transmits the text as a text packet stream to the PoC user in step 611. In contrast, as a result of step 607, when the session monitoring method is not set to text, the PoC server 120 deletes the voice message by filtering in step 613, and then requests, through an SIP message, that the terminal of the PoC user outputs a beep or light in step 615.

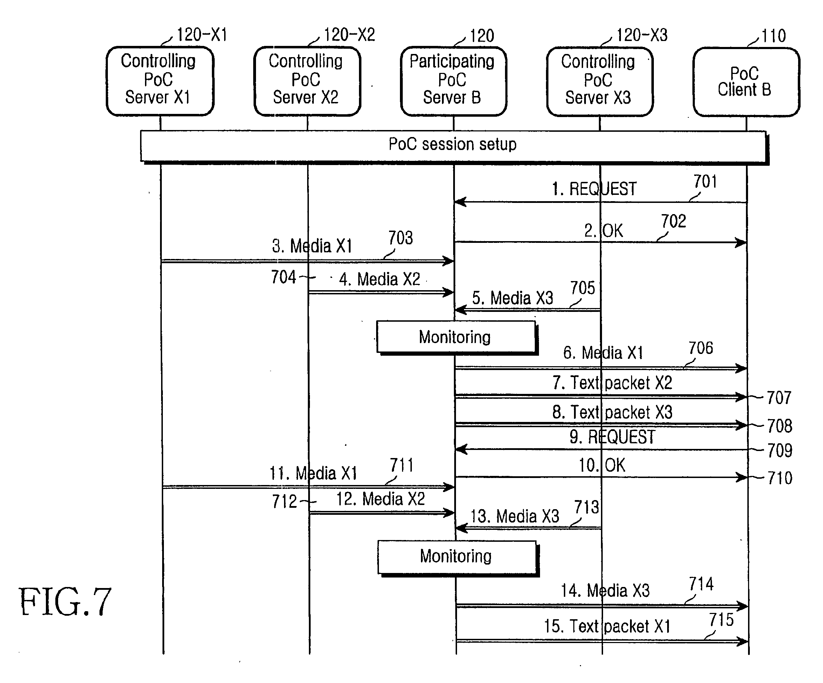

FIGs. 7 to 9 are diagrams illustrating multisession monitoring operation procedures according to the present invention. When a user wants to participate in three sessions (X1, X2 and X3), session set up is required between the user and PoC servers 120a, 120b and 120c corresponding to the three sessions first of all. POC servers 120a, 120b and 120c correspond to servers X1(120-X1), X2(120-X2) and X3(120-X3), respectively, as shown in FIGs. 7-9. The user participation in more than one session in such a manner is referred to as a multisession. Three embodiments for monitoring inactive sessions in such a multisession will now be described one by one. A first embodiment of the present invention refers to a method of monitoring an inactive session by converting a voice message into text when there is a voice message stream in the inactive session, which will be described with reference to FIG. 7.

When a PoC session is set up, a user (PoC client B) 110 sends a request message for a monitoring set up to the intermediate PoC server B 120 in step 701.

The request message contains information in which the X1 session is selected as an active session, the X2 and X3 sessions are selected as inactive sessions, and the monitoring method for each inactive session is set up as expressing the X2 and X3 sessions by text. Herein, in the inactive session selection, selecting all sessions as inactive sessions wastes physical channels and may deteriorate the voice quality of the active session. Therefore, the user may select only sessions desired by the user in order to avoid these problems.

In step 702, the intermediate PoC server B 120 transmits an OK message to the PoC user B 110 in response to the request message.

In steps 703 to 705, the intermediate PoC server B 120 receives voice messages transmitted through each session from the control PoC servers 120-X1, 120-X2 and 120-X3 according to the PoC sessions (X1, X2 and X3). Then, the intermediate PoC server B 120 performs a monitoring operation for selecting an active session using the voice messages Media X1, Media X2 and Media X3 which are received through the respective sessions. Since the monitoring results in that the X1 session (first session) is the active session, the intermediate PoC server B 120 transmits the voice message in the X1 session to the PoC user B in step 706.

In step 707, the intermediate PoC server B 120 converts the voice message in the X2 session (second session) into a text packet stream through the VTTF 123 according to the set monitoring method, and sends the converted text packet stream to the PoC user B 110. Similarly to step 707, in step 708, the intermediate PoC server B 120 converts the voice message in the X3 session (third session) into a text packet stream through the VTTF 123 according to the set monitoring method, and transmits the converted text packet stream to the PoC user B 110. In this case, the text packet stream transmitted to the PoC user B 110 may include information about a talker ID or PoC address to be displayed on the PoC user B.

When the PoC user B 110 wants to change the active session, the intermediate PoC server B 120 again receives a request message from the PoC user B 110 in step 709. The request message contains information in which the X3 session is selected as an active session, the X1 session is selected as an inactive session, and the monitoring method for each inactive session is set up as expressing the X1 session by text. Herein, in the inactive session selection, selecting all sessions as inactive sessions wastes physical channels and may deteriorate the voice quality of the active session. Therefore, the user may select only sessions desired by the user in order to avoid these problems.

In step 710, the intermediate PoC server B 120 transmits an OK message to the PoC user B 110 in response to the request message.

In steps 711 to 713, the intermediate PoC server B 120 receives the voice messages transmitted through each session from the control PoC servers 120-X1, 120-X2 and 120-X3 according to the PoC sessions. Then, the intermediate PoC server B 120 performs a monitoring operation for selecting an active session using the voice messages received through the respective sessions. Since the monitoring results in that the X3 session is the active session, the intermediate PoC server B 120 transmits the voice message in the X3 session to the PoC user B in step 714.

In step 715, the intermediate PoC server B 120 converts the voice message in the X1 session into a text packet stream through the VTTF 123 according to the set monitoring method, and sends the converted text packet stream to the PoC user B 110. In this case, the text packet stream transmitted to the PoC user B 110 may include information about a talker ID or PoC address to be displayed on the PoC user B.

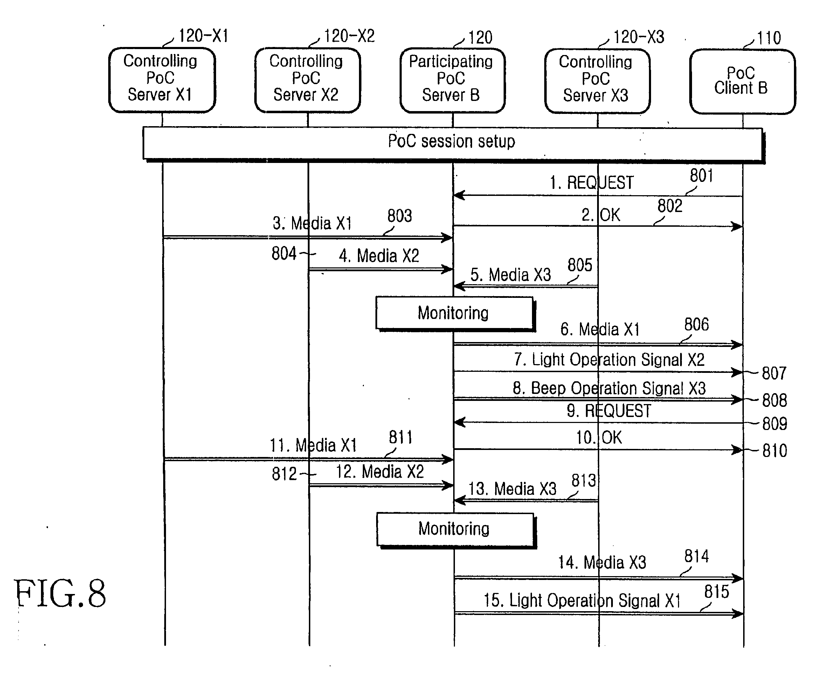

A second embodiment of the present invention refers to a method of indicating a voice message in an inactive session by a beep or light when there is a voice message stream in the inactive session, which will be described with reference to FIG. 8.

When a PoC session is set up, a user (PoC client B) 110 sends a request message for a monitoring set up to the intermediate PoC server B 120 in step 801. The request message contains information in which the X1 session is selected as an active session, the X2 and X3 sessions are selected as inactive sessions, and the monitoring method for each inactive session is set up as expressing the X2 and X3 sessions by activating a visual light and an audible beep (or other such visual, audible or other alerting means such as a flash, a musical tone, a vibrating means, ect.), respectively. Herein, in the inactive session selection, selecting all sessions as inactive sessions wastes physical channels and may deteriorate the voice quality of the active session. Therefore, the user may select only sessions desired by the user in order to avoid these problems.

In step 802, the intermediate PoC server B 120 transmits an OK message to the PoC user B 110 in response to the request message.

In steps 803 to 805, the intermediate PoC server B 120 receives the voice messages transmitted through each session from the control PoC servers 120-X1, 120-X2 and 120-X3 according to the PoC sessions. Then, the intermediate PoC server B 120 performs a monitoring operation for selecting an active session using the voice messages received through the respective sessions. Since the monitoring results in that the X1 session is the active session, the intermediate PoC server B 120 transmits the voice message in the X1 session to the PoC user B 110 in step 806.

In step 807, the intermediate PoC server B 120 deletes the voice message of the X2 session (inactive session) through a filtering operation. At the same time, whenever there is the voice message in the X2 session, the intermediate PoC server B 120 operates a light function of the terminal of the PoC user B 110 through an SIP message, thereby notifying the PoC user B 110 that there is the voice message in the X2 session. In this case, the notified information may include information about a talker ID or PoC address.

In step 808, the intermediate PoC server B 120 deletes the voice message of the X3 session (inactive session) through a filtering operation. At the same time, whenever there is the voice message in the X3 session, the intermediate PoC server B 120 operates a beep function of the terminal of the PoC user B 110 through an SIP message, thereby notifying the PoC user B 110 that there is the voice message in the X3 session. Similarly, the notified information may include information about a talker ID or PoC address.

When the PoC user B 110 wants to change the active session, the intermediate PoC server B 120 receives a request message from the PoC user B 110 in step 809. The request message contains information in which the X3 session is selected as an active session, the X1 session is selected as an inactive session, and the monitoring method for each inactive session is set up as expressing the X1 session by light. Herein, in the inactive session selection, selecting all sessions as inactive sessions wastes physical channels and may deteriorate the voice quality of the active session. Therefore, the user may select only sessions desired by the user in order to avoid these problems.

In step 810, the intermediate PoC server B 120 transmits an OK message to the PoC user B 110 in response to the request message.

In steps 811 to 813, the intermediate PoC server B 120 receives the voice messages transmitted through each session from the control PoC servers 120-X1, 120-X2 and 120-X3 according to the PoC sessions. Then, the intermediate PoC server B 120 performs a monitoring operation for selecting an active session using the voice messages received through the respective sessions. Since the monitoring results in that the X3 session is the active session, the intermediate PoC server B 120 transmits the voice message in the X3 session (active session) to the PoC user B 110 according to the request of the request message in step 814.

In step 815, the intermediate PoC server B 120 deletes the voice message of the X1 session (inactive session) through a filtering operation. At the same time, whenever there is a voice message in the X1 session, the intermediate PoC server B 120 operates a light function of the terminal of the PoC user B 110 through an SIP message, thereby notifying the PoC user B 110 of information that there is the voice message in the X1 session. In this case, the notified information may include information about a talker ID or PoC address.

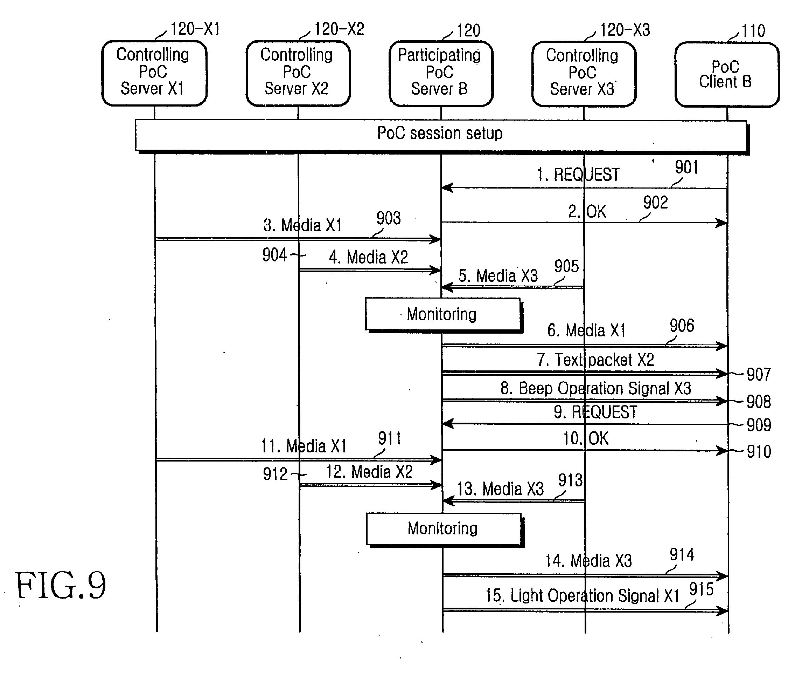

Finally, a third embodiment of the present invention will be described with reference to FIG. 9, showing a method in which an inactive session is monitored using a text converted from a voice message and a voice message in another inactive session is noticed by an audible beep or a visual light, when there is a voice message stream in the inactive sessions.

When a PoC session is set up, a user (PoC client B) 110 sends a request message for a monitoring set up to the intermediate PoC server B 120 in step 901. The request message contains information in which the X1 session is selected as an active session, the X2 and X3 sessions are selected as inactive sessions, and the monitoring method for each inactive session is set up as expressing the X2 and X3 sessions using a text message and an audible beep, respectively. Herein, in the inactive session selection, selecting all sessions as inactive sessions wastes physical channels and may deteriorate the voice quality of the active session. Therefore, the user may select only sessions desired by the user in order to avoid these problems.

In step 902, the intermediate PoC server B 120 transmits an OK message to the PoC user B 110 in response to the request message.

In steps 903 to 905, the intermediate PoC server B 120 receives the voice messages transmitted through each session from the control PoC servers 120-X1, 120-X2 and 120-X3 according to the PoC sessions. Then, the intermediate PoC server B 120 performs a monitoring operation for selecting an active session using the voice messages received through the respective sessions. Since the monitoring results in that the X1 session is the active session, the intermediate PoC server B 120 transmits the voice message in the X1 session to the PoC user B 110 in step 906.

In step 907, the intermediate PoC server B 120 converts the voice message in the X2 session (inactive session) into a text packet stream through the VTTF 123 according to the set monitoring method, and sends the converted text packet stream to the PoC user B 110. In this case, the text packet stream transmitted to the PoC user B 110 may include information about a talker ID or PoC address.

In step 908, the intermediate PoC server B 120 deletes the voice message of the X3 session (inactive session) through a filtering operation. At the same time, whenever there is a voice message in the X3 session, the intermediate PoC server B 120 operates a beep function of the terminal of the PoC user B 110 through an SIP message, thereby notifying the PoC user B 110 of information that there is the voice message in the X3 session. Similarly, the notified information may include information about a talker ID or PoC address.

When the PoC user B 110 wants to change the active session, the intermediate PoC server B 120 receives a request message from the PoC user B 110 in step 909. The request message contains information in which the X3 session is selected as an active session, the X1 session is selected as an inactive session, and the monitoring method for each inactive session is set up as expressing the X1 session by activating a visual light source. Herein, in the inactive session selection, selecting all sessions as inactive sessions wastes physical channels and may deteriorate the voice quality of the active session. Therefore, the user may select only sessions desired by the user in order to avoid these problems.

In step 910, the intermediate PoC server B 120 transmits an OK message to the PoC user B 110 in response to the request message.

In steps 911 to 913, the intermediate PoC server B 120 receives the voice messages transmitted through each session from the control PoC servers 120-X1, 120-X2 and 120-X3 according to the PoC sessions. Then, the intermediate PoC server B 120 performs a monitoring operation for selecting an active session using the voice messages received through the respective sessions. Since the monitoring results in that the X3 session is the active session, the intermediate PoC server B 120 transmits the voice message in the X3 session (active session) to the PoC user B 110 according to the request of the request message in step 914.

In step 915, the intermediate PoC server B 120 deletes the voice message of the X1 session (inactive session) through a filtering operation. At the same time, whenever there is a voice message in the X1 session, the intermediate PoC server B 120 operates a light function of the terminal of the PoC user B 110 through an SIP message, thereby notifying the PoC user B 110 of information that there is the voice message in the X1 session. In this case, the notified information may include information about a talker ID or PoC address.

According to the embodiments of the present invention as described above, whenever there is a voice message, the PoC user B 110 receives an SIP message which includes information about a group identity, a talker PoC address (PoC address of talk burst sender), a talker name or nickname (display ID of talk burst sender) and provided PoC service notification (PoC service indication). Also, the SIP message may include information about that the monitoring indication request is set to use light.

The present invention as described above exceeds listening to the voice message of only the active session as in the prior art and enables the user to receive the voice message of an inactive session as a text and/or to notice existence of a voice message stream in an inactive session through light or sound. Therefore, the user receives information about the status of the inactive session and also can understand the conversation contents going and coming through inactive sessions.

According to the present invention as described above, while the user participates in the active session, the user can check conversation contents discussed in inactive sessions. Also, when the user wants to change the active session, the user can determine whether each inactive session includes a voice message in advance.

Shifting between an active session and an inactive session can be performed not only by a user request but also the operation of the PoC server which are based on the policy of the PoC service provider. In this case, since it is possible to monitor inactive sessions, media management can be efficiently accomplished.

While the present invention has been shown and described with reference to certain preferred embodiments thereof, the method and apparatus according to the present invention can be applied to various methods such as a monitoring set up method, a monitoring execution method, etc. Accordingly, the scope of the invention is not to be limited by the above embodiments but by the appended claims.

## Claims

1. A method for monitoring simultaneous sessions in a push-to-talk-over cellular, PoC, network, the method comprising the steps of:
transmitting (701, 801, 901) a monitoring set up request message by a PoC client (110) to a PoC intermediate unit (122);
receiving (703-705, 803-805, 903-905) a message by the PoC intermediate unit (122) from a session associated with the PoC client (110); and
determining (603) whether the received message is a message of an active session, and transmitting (707, 708, 807, 808, 907, 908) message reception information to the PoC client (110) when the received message is a message of an inactive session.

2. The method as claimed in claim 1, further comprising a step of transmitting (706, 806, 906) the received message to the PoC client (110) when the received message is a message of an active session.

3. The method as claimed in claim 1, wherein the message reception information is converted (609) into a text format to be transmitted.

4. The method as claimed in claim 3, further comprising a step of filtering (613) a message of an inactive session to be deleted, when the message is converted and transmitted.

5. The method as claimed in claim 1, wherein the message reception information includes information for causing a client's terminal (110) to emit at least one of an audible beep and a visual light.

6. The method as claimed in claim 1, wherein the monitoring set up request message includes a monitoring scheme for a received inactive message.

7. The method as claimed in claim 1, further comprising a step of determining a caller-ID of the received message by the PoC intermediate unit (122).

8. A system for monitoring simultaneous sessions in a push-to-talk-over cellular, PoC, network, the system comprising:
a PoC client (110) for requesting a monitoring set up for an inactive session in simultaneous sessions; and
a PoC server (120) for receiving a monitoring set up request message from the PoC client (110), receiving a message from a plurality of sessions associated with the PoC client (110), and transmitting message reception information to the PoC client (110), the message reception information including information about message reception from the inactive session.

9. The system as claimed in claim 8, wherein the PoC server (120) is further adapted to determine a session of the received message and a monitoring scheme set for the session.

10. The system as claimed in claim 9, further comprising a text conversion unit (123) for converting the message into a text form when the monitoring scheme for the session is set to use text.

11. The system as claimed in claim 10, wherein the PoC server (120) is further adapted to filter a message of the inactive session to be deleted when the message is transmitted in a text form.

12. The system as claimed in claim 8, wherein the PoC server (120) is further adapted to transmit the received message to the PoC client (110) when the received message is a message of an active session.

13. The system as claimed in claim 8, wherein the message reception information includes information causing a PoC client's terminal (110) to emit at least one of an audible beep and a visual light.

14. The system as claimed in claim 8, wherein the monitoring set up request message includes a monitoring scheme for a received inactive message.

15. The system as claimed in claim 9, wherein the PoC server (120) is further adapted to determine a caller-ID of a received message.

16. A method for monitoring simultaneous sessions by a push-to-talk-over cellular, PoC, terminal in a PoC network, the method comprising the steps of:
transmitting (701, 801, 901) a session monitoring request message to a PoC intermediate unit (122); and
receiving (707, 708, 807, 808, 907, 908) inactive message reception information, the inactive message reception information including information about message reception from an inactive session of the simultaneous sessions.

17. The method as claimed in claim 16, wherein an inactive message is received as one of text message, an audible beep and a visual light.

18. The method as claimed in claim 16, further comprising a step of receiving (706, 806, 906) a message received and transmitted by the PoC intermediate unit (122) when the message is a message of an active session.

19. The method as claimed in claim 16, wherein the message reception information is converted (609) into a text format to be received.

20. The method as claimed in claim 16, wherein the message reception information is received as one of an audible beep and a visual light.

21. A push-to-talk-over cellular, PoC, terminal (110) for monitoring simultaneous sessions in a PoC network,
wherein the PoC terminal (110) is adapted to transmit a session monitoring request message to a PoC intermediate unit (122) and to receive a converted message when the session monitoring request message relates to a message of an inactive session.

22. The PoC terminal (110) as claimed in claim 21, wherein the PoC client (110) is adapted to receive a message having been received by the intermediate unit (122) when the session monitoring request message relates to a message of an active session.

23. The PoC terminal (110) as claimed in claim 21, wherein the PoC terminal (110) is further adapted to receive message reception information converted into a text message.

24. The PoC terminal (110) as claimed in claim 21, wherein the PoC terminal (110) is further adapted to receive the message reception information as one of an audible beep and a visual light.

## Patentansprüche

1. Ein Verfahren zur Überwachung gleichzeitiger Sitzungen in einem Push-to-Talk-über Mobilfunk, PoC, Netzwerk, wobei das Verfahren die Schritte umfasst:
Senden (701, 801, 901) einer Anforderungsnachricht zum Einrichten der Überwachung von einem PoC-Client (110) an eine PoC-Zwischeneinheit (122);
Empfangen (703-705, 803-805, 903-905) einer Nachricht durch die PoC-Zwischeneinheit (122) von einer Sitzung, die dem PoC-Client (110) zugeordnet ist; und
Bestimmen (603), ob die empfangene Nachricht eine Nachricht einer aktiven Sitzung ist, und Übertragen (707, 708, 807, 808, 907, 908) von Nachrichtenempfangsinformationen an den PoC-Client (110), wenn die empfangene Nachricht eine Nachricht einer inaktiven Sitzung ist.

2. Das Verfahren nach Anspruch 1, ferner umfassend einen Schritt des Sendens (706, 806, 906) der empfangenen Nachricht an den PoC-Client (110), wenn die empfangene Nachricht eine Nachricht einer aktiven Sitzung ist.

3. Das Verfahren nach Anspruch 1, wobei die Nachrichtenempfangsinformationen in ein zu übertragendes Textformat umgewandelt (609) werden.

4. Das Verfahren nach Anspruch 3, ferner umfassend einen Schritt des Filterns (613) einer zu löschenden Nachricht einer inaktiven Sitzung, wenn die Nachricht umgewandelt und übertragen wird.

5. Das Verfahren nach Anspruch 1, wobei die Nachrichtenempfangsinformationen Informationen enthalten, um ein Client-Endgerät (110) zu veranlassen, mindestens eines von einem hörbaren Piepton und einem sichtbaren Licht zu emittieren.

6. Das Verfahren nach Anspruch 1, wobei die Anforderungsnachricht zum Einrichten der Überwachung ein Überwachungssystem für eine empfangene inaktive Nachricht enthält.

7. Das Verfahren nach Anspruch 1, ferner umfassend einen Schritt des Bestimmens einer Anrufer-ID der empfangenen Nachricht durch die PoC-Zwischeneinheit (122).

8. Ein System zur Überwachung gleichzeitiger Sitzungen in einem Push-to-Talk-über Mobilfunk, PoC, Netzwerk, wobei das System umfasst:
einen PoC-Client (110) zum Anfordern des Einrichtens einer Überwachung für eine inaktive Sitzung in gleichzeitigen Sitzungen; und
einen PoC-Server (120) zum Empfangen einer Anforderungsnachricht zum Einrichten der Überwachung von dem PoC-Client (110), Empfangen einer Nachricht von einer Vielzahl von dem PoC-Client (110) zugeordneten Sitzungen, und Übertragen von Nachrichtenempfangsinformationen an den PoC-Client (110), wobei die Nachrichtenempfangsinformationen Informationen über den Nachrichtenempfang von der inaktiven Sitzung enthalten.

9. Das System nach Anspruch 8, wobei der PoC-Server (120) ferner dazu geeignet ist, eine Sitzung der empfangenen Nachricht zu bestimmen und ein Überwachungssystem für die Sitzung festzulegen.

10. Das System nach Anspruch 9, ferner umfassend eine Text-Umwandlungseinheit (123) zum Umwandeln der Nachricht in eine Textform, wenn das Überwachungssystem für die Sitzung auf das Verwenden von Text festgelegt wird.

11. Das System nach Anspruch 10, wobei der PoC-Server (120) ferner dazu geeignet ist, eine zu löschende Nachricht der inaktiven Sitzung zu filtern, wenn die Nachricht in einer Textform übertragen wird.

12. Das System nach Anspruch 8, wobei der PoC-Server (120) ferner dazu geeignet ist, die empfangene Nachricht an den PoC-Client (110) zu übertragen, wenn die empfangene Nachricht eine Nachricht einer aktiven Sitzung ist.

13. Das System nach Anspruch 8, wobei die Nachrichtenempfangsinformationen Informationen enthalten, die ein PoC-Client-Endgerät (110) dazu veranlassen, mindestens eines von einem hörbaren Piepton und einem sichtbares Licht zu emittieren.

14. Das System nach Anspruch 8, wobei die Anforderungsnachricht zum Einrichten der Überwachung ein Überwachungssystem für eine empfangene inaktive Nachricht enthält.

15. Das System nach Anspruch 9, wobei der PoC-Server (120) ferner dazu geeignet ist, eine Anrufer-ID einer empfangenen Nachricht zu bestimmen.

16. Ein Verfahren zur Überwachung gleichzeitiger Sitzungen durch ein Push-to-Talk-über Mobilfunk, PoC, Endgerät in einem PoC-Netzwerk, wobei das Verfahren die Schritte umfasst:
Senden (701, 801, 901) einer Anforderungsnachricht zur Überwachung einer Sitzung an eine PoC-Zwischeneinheit (122); und
Empfangen (707, 708, 807, 808, 907, 908) von inaktiven Nachrichtenempfangsinformationen, wobei die inaktiven Nachrichtenempfangsinformationen Informationen über den Nachrichtenempfang von einer inaktiven Sitzung der gleichzeitigen Sitzungen enthält.

17. Das Verfahren nach Anspruch 16, wobei eine inaktive Nachricht als eines von einer Textnachricht, einem hörbaren Piepton und einem sichtbaren Licht empfangen wird.

18. Das Verfahren nach Anspruch 16, ferner umfassend einen Schritt des Empfangens (706, 806, 906) einer von der PoC-Zwischeneinheit (122) empfangenen und übertragenen Nachricht, wenn die Nachricht eine Nachricht einer aktiven Sitzung ist.

19. Das Verfahren nach Anspruch 16, wobei die Nachrichtenempfangsinformationen in ein zu empfangendes Textformat umgewandelt (609) werden.

20. Das Verfahren nach Anspruch 16, wobei die Nachrichtenempfangsinformationen als eines von einem hörbaren Piepton und einem sichtbaren Licht empfangen werden.

21. Ein Push-to-Talk-über Mobilfunk, PoC, Endgerät (110) zur Überwachung gleichzeitiger Sitzungen in einem PoC-Netzwerk,
wobei das PoC-Endgerät (110) dazu geeignet ist, eine Anforderungsnachricht zur Überwachung einer Sitzung an eine PoC-Zwischeneinheit (122) zu senden und eine umgewandelte Nachricht zu empfangen, wenn die Anforderungsnachricht zur Überwachung einer Sitzung eine Nachricht einer inaktiven Sitzung betrifft.

22. Das PoC-Endgerät (110) nach Anspruch 21, wobei der PoC-Client (110) dazu geeignet ist, eine Nachricht, die von der Zwischeneinheit (122) empfangen wurde, zu empfangen, wenn die Anforderungsnachricht zur Überwachung einer Sitzung eine Nachricht einer aktiven Sitzung betrifft.

23. Das PoC-Endgerät (110) nach Anspruch 21, wobei das PoC-Endgerät (110) ferner dazu geeignet ist, Nachrichtenempfangsinformationen, die in eine Textnachricht umgewandelt wurden, zu empfangen.

24. Das PoC-Endgerät (110) nach Anspruch 21, wobei das PoC-Endgerät (110) ferner dazu geeignet ist, die Nachrichtenempfangsinformationen als eines von einem hörbaren Piepton und einem sichtbaren Licht zu empfangen.

## Revendications

1. Un procédé de surveillance de sessions simultanées dans un push-to-talk-sur réseau cellulaire, PoC, réseau, le procédé comprenant les étapes consistant à:
transmettre (701, 801, 901) un message de demande de réglage de surveillance par un client PoC (110) à une unité PoC intermédiaire (122);
recevoir (703-705, 803-805, 903-905) un message par l'unité PoC intermédiaire (122) d'une session associée avec le client PoC (110); et
déterminer (603) si le message reçu est un message d'une session active, et transmettre (707, 708, 807, 808, 907, 908) des informations de réception du message au client PoC (110) lorsque le message reçu est un message d'une session inactive.

2. Procédé selon la revendication 1, comprenant en outre une étape consistant à transmettre (706, 806, 906) le message reçu au client PoC (110) lorsque le message reçu est un message d'une session active.

3. Procédé selon la revendication 1, dans lequel les informations de réception du message sont converties (609) dans un format de texte à transmettre.

4. Procédé selon la revendication 3, comprenant en outre une étape consistant à filtrer (613) un message d'une session inactive à supprimer, lorsque le message est converti et transmis.

5. Procédé selon la revendication 1, dans lequel les informations de réception du message comprennent des informations pour amener un terminal d'un client (110) à émettre au moins l'un d'un bip sonore et d'une lumière visible.

6. Procédé selon la revendication 1, dans lequel le message de demande de réglage de surveillance comprend un système de surveillance pour un message inactif reçu.

7. Procédé selon la revendication 1, comprenant en outre une étape consistant à déterminer une identification de l'appelant du message reçu par l'unité PoC intermédiaire (122).

8. Un système de surveillance de sessions simultanées dans un push-to-talk-sur réseau cellulaire, PoC, réseau, le système comprenant:
un client PoC (110) pour demander un réglage de surveillance pour une session inactive dans des sessions simultanées; et
un serveur PoC (120) pour recevoir un message de demande de réglage de surveillance du client PoC (110), recevoir un message provenant d'une pluralité de sessions associées au client PoC (110), et transmettre des informations de réception du message au client PoC (110), les informations de réception du message comprenant des informations sur la réception du message de la session inactive.

9. Le système selon la revendication 8, dans lequel le serveur PoC (120) est adapté, en outre, pour déterminer une session du message reçu et un système de surveillance défini pour la session.

10. Le système selon la revendication 9, comprenant en outre une unité de conversion de texte (123) pour convertir le message en une forme de texte lorsque le système de surveillance pour la session est configuré pour utiliser de texte.

11. Le système selon la revendication 10, dans lequel le serveur PoC (120) est adapté, en outre, pour filtrer un message de la session inactive à être supprimé lorsque le message est transmis sous forme de texte.

12. Le système selon la revendication 8, dans lequel le serveur PoC (120) est adapté, en outre, pour transmettre le message reçu au client PoC (110) lorsque le message reçu est un message d'une session active.

13. Le système selon la revendication 8, dans lequel les informations de réception du message comprennent des informations pour amener un terminal d'un client PoC (110) à émettre au moins l'un d'un bip sonore et d'une lumière visible.

14. Le système selon la revendication 8, dans lequel le message de demande de réglage de surveillance comprend un système de surveillance pour un message inactif reçu.

15. Le système selon la revendication 9, dans lequel le serveur PoC (120) est adapté, en outre, pour déterminer une identification de l'appelant d'un message reçu.

16. Un procédé de surveillance de sessions simultanées par un push-to-talk-sur réseau cellulaire, PoC, terminal dans un réseau PoC, le procédé comprenant les étapes consistant à:
transmettre (701, 801, 901) un message de demande de surveillance de session à une unité PoC intermédiaire (122); et
recevoir (707, 708, 807, 808, 907, 908) des informations de réception du message inactif, les informations de réception du message inactif comprenant des informations sur la réception du message d'une session inactive des sessions simultanées.

17. Procédé selon la revendication 16, dans lequel un message inactif est reçu comme l'un de message texte, d'un bip sonore et d'une lumière visible.

18. Procédé selon la revendication 16, comprenant en outre une étape de réception (706, 806, 906) d'un message reçu et transmis par l'unité PoC intermédiaire (122) lorsque le message est un message d'une session active.

19. Procédé selon la revendication 16, dans lequel les informations de réception du message sont converties (609) dans un format de texte à recevoir.

20. Procédé selon la revendication 16, dans lequel les informations de réception du message sont reçues comme l'un d'un bip sonore et d'une lumière visible.

21. Un push-to-talk-sur réseau cellulaire, PoC, terminal (110) pour surveiller des sessions simultanées dans un réseau PoC,
dans lequel le terminal PoC (110) est adapté pour transmettre un message de demande de surveillance de session à une unité PoC intermédiaire (122) et pour recevoir un message converti lorsque le message de demande de surveillance de session se rapporte à un message d'une session inactive.

22. Le terminal PoC (110) selon la revendication 21, dans lequel le client PoC (110) est adapté pour recevoir un message ayant été reçu par l'unité intermédiaire (122) lorsque le message de demande de surveillance de session se rapporte à un message d'une session active.

23. Le terminal PoC (110) selon la revendication 21, dans lequel le terminal PoC (110) est adapté, en outre, pour recevoir des informations de réception du message converties en un message texte.

24. Le terminal PoC (110) selon la revendication 21, dans lequel le terminal PoC (110) est adapté, en outre, pour recevoir les informations de réception du message comme l'un d'un bip sonore et d'une lumière visible.
